# EUROPÄISCHE PATENTSCHRIFT

(11) **EP 1 761 585 B1**
(45) Veröffentlichungstag und Bekanntmachung des Hinweises auf die Patenterteilung: **17.12.2008**
(21) Anmeldenummer: 05762650.9
(22) Anmeldetag: 17.06.2005
(51) Int. Cl.: C08G 65/12

(54) **VERFAHREN ZUR HERSTELLUNG VON MITTELS ISOCYANATEN GEKOPPELTEN POLYOXIRANEN**
METHOD FOR PRODUCING ISOCYANATE-COUPLED POLYOXIRANES
PROCEDE POUR PRODUIRE DES POLYOXIRANES COUPLES AU MOYEN D'ISOCYANATES

(30) Priorität: 23.06.2004 DE 102004030071
(43) Veröffentlichungstag der Anmeldung: 14.03.2007
(73) Patentinhaber: BASF SE, 67056 Ludwigshafen (DE)
(72) Erfinder: DESBOIS, Philippe, 67487 Maikammer (DE); DEFFIEUX, Alain, F-33000 Bordeaux (FR); CARLOTTI, Stéphane, F-33600 Pessac (FR); BILLOUARD, Cyrille, 68169 Mannheim (DE)
(86) Internationale Anmeldenummer: PCT/EP2005/006548
(87) Internationale Veröffentlichungsnummer: WO 2006/000348

(56) Entgegenhaltungen:
- DE-A1- 2 438 880
- DE-A1- 10 136 446
- US-A- 4 297 240

## Beschreibung

Die Erfindung betrifft ein Verfahren zur Herstellung von Polymeren P2 aus Oxiranen und optionalen Comonomeren, dadurch gekennzeichnet, dass man
1) in einem Schritt 1) aus den Oxiranen und ggf. den Comonomeren durch anionische Polymerisation in Gegenwart eines Aluminiumorganyls ein oder mehrere Oxiranpolymere P1 mit einem gewichtsmittleren Molekulargewicht M1 herstellt, und
2) in einem Schritt 2) diese Oxiranpolymere P1 mit einem Kopplungsmittel zu dem Polymer P2 mit einem gewichtsmittleren Molekulargewicht M2 umsetzt, wobei M2 größer ist als M1, und wobei das Kopplungsmittel ein aromatisches oder aliphatisches Isocyanat ist, das mindestens zwei Isocyanatgruppen pro Molekül aufweist.

Außerdem betrifft die Erfindung die nach dem Verfahren erhältlichen Polymere, deren Verwendung zur Herstellung von Formkörpern, Folien, Fasern und Schäumen, sowie die Formkörper, Folien, Fasern und Schäume aus den Polymeren.

Unter Oxiranen sollen Epoxide einfacher Struktur verstanden werden, beispielsweise Ethylenoxid (EO), auch als Oxiran bezeichnet, und Propylenoxid (PO) auch als Methyloxiran bezeichnet. Siehe auch CD Römpp Chemie Lexikon, Version 2.2, Thieme Verlag Stuttgart, 2004 (nachfolgend als Römpp zitiert), Stichwort "Oxirane". Als OxiranPolymere sind insbesondere Polyethylenoxid (PEO) und Polypropylenoxid (PPO) zu nennen.

PO- und EO-Polymere können u.a. durch anionische Polymerisation hergestellt werden. Verwendet man neben dem Oxiran ein weiteres, anionisch polymerisierbares Monomer wie z.B. Styrol, so lassen sich auch Oxiran-Copolymere herstellen, insbesondere Blockcopolymere. Die älteren, nicht vorveröffentlichen DE-Anmeldungen mit den Aktenzeichen 10323047.5 vom 20.05.2003, 10352105.4 vom 04.11.2003, 102004027095.3 vom 02.06.2004 und 102004027070.8 vom 02.06.2004 beschreiben Homo- und Copolymere von Oxiranen wie PO und EO, auch Blockcopolymere aus Oxiranblöcken und Styrolpolymerblöcken, beispielsweise Polystyrol-PPO-Blockcopolymere.

Diese Schriften erwähnen die Herstellung von Dreiblockcopolymeren durch Kopplung von Zweiblockcopymeren mit einem weiteren Polymerblock zu Dreiblockcopolymeren, sowie die Herstellung von sternförmigen Blockcopolymeren durch Kopplung, wobei die lebenden anionischen Polymerketten mit bifunktionellen Kopplungsmitteln umgesetzt werden. Auch die Herstellung von verzweigten Blockcopolymeren durch Pfropfreaktionen wird beschrieben. Als Kopplungsmittel werden epoxidierte Glyceride, z.B. epoxidiiertes Leinsamenöl, Siliciumhalogenide, Divinylbenzol, polyfunktionelle Aldehyde, Ketone, Ester, Anhydride oder Epoxide genannt.

Die US-PS 3,637,554 beschreibt die Herstellung von verzweigten Blockcopolymeren aus konjugierten Dienen und vinylaromatischen Verbindungen, insbesondere Butadien und Styrol, unter Verwendung von polyfunktionellen Verbindungen wie Polyepoxiden oder auch Polyisocyanaten mit mindestens 3 Isocyanatgruppen.

In der US-PS 3,985,830 wird die Herstellung sternförmiger Polymere aus vinylaromatischen Verbindungen und konjugierten Dienen, wie z.B. Styrol und Isopren, beschrieben, wobei u.a. bestimmte aromatische Di- oder Polyisocyanate als Kopplungsmittel verwendet werden. Die einfachen Diisocyanate Toluoldiisocyanat und Tetramethylendiisocyanat werden als ungeeignet beschrieben.

In beiden US-Schriften werden Oxirane als Monomere oder oxiranhaltige Polymere nicht erwähnt.

Es bestand die Aufgabe, ein alternatives Verfahren zur Herstellung von Oxiranpolymeren bereitzustellen. Außerdem besteht für besonders anspruchsvolle Anwendungen ein Bedarf an Oxiranpolymeren mit höherem Molekulargewicht; daher sollte das Verfahren die Herstellung solcher höhermolekularen Oxiranpolymere ermöglichen.

Weiterhin sollten sich mit dem Verfahren Dreiblockcopolymere auf einfache Weise herstellen lassen, insbesondere solche des Typs B-A-B, worin A für einen Polyoxiranblock und B für einen Copolymerblock steht.

Schließlich sollte das Verfahren auch die Herstellung von Pfropfpolymeren und vernetzten Polymeren (Polymernetzwerken bzw. Polymergelen) ermöglichen.

Demgemäß wurde das eingangs definierte Verfahren, die damit erhältlichen Polymere, deren Verwendung zur Herstellung von Formkörpern, Folien, Fasern und Schäumen, sowie die Formkörper, Folien, Fasern und Schäume aus den Polymeren, gefunden. Bevorzugte Ausführungsformen der Erfindung sind den Unteransprüchen zu entnehmen.

Bei dem erfindungsgemäßen Verfahren stellt man aus Oxiranen und optionalen Comonomeren, Polymere P2 her. Dabei bedeutet optionale Comonomere, dass solche Comonomere vorhanden sein können, aber nicht müssen. Demnach handelt es sich bei dem Polymer P2 um ein Oxiranhomopolymer oder ein Oxirancopolymer, wobei das Kopplungsmittel Isocyanat hier nicht zu den Monomeren gerechnet wird. Das Isocyanat ist demnach kein Monomer oder Comonomer im Sinne der Erfindung.

Als Oxirane sind alle Epoxide einfacher Struktur geeignet, insbesondere solche ohne kondensierte Ringsysteme. Bevorzugt sind die Oxirane ausgewählt aus Propylenoxid (PO), Ethylenoxid (EO) oder deren Mischungen.

Man kann mehrere Oxirane gemeinsam verwenden, beispielsweise PO und EO zusammen. Es wurde gefunden, dass PO/EO-Gemische in ähnlicher Weise polymerisieren wie reines PO. Aufgrund dieses ähnlichen Polymerisationsverhaltens kann man einen Teil des PO durch EO ersetzen, ohne die Polymerisationsbedingungen (Verfahrensparameter) wesentlich ändern zu müssen. Dies bringt wirtschaftliche Vorteile, da aufwändige Verfahrensanpassungen entfallen. Außerdem ist EO in der Regel preiswerter als PO. Solche PO-EO-Polymere können z.B. statistische oder Blockpolymere sein.

Geeignete Gemische von PO und EO weisen üblicherweise einen EO-Anteil von 0,1 bis 99,9, insbesondere 10 bis 90 und besonders bevorzugt 20 bis 80 Gew.-% auf, bezogen auf das Gemisch.

Oxiranpolymere, die zwar mehr als ein Oxiran, z.B. PO zusammen mit EO, aber keine anderen Comonomere enthalten, werden nachfolgend als Oxiranhomopolymere bezeichnet, d.h. Comonomere im Sinne der Erfindung sind alle von Oxiranen verschiedenen Monomere.

Als optionale Comonomere für die Polymere P2 kommen bevorzugt solche Monomere in Betracht, die anionisch polymerisierbar sind, z.B. Styrolmonomere und Dienmonomere. Als Styrolmonomere sind alle vinylaromatischen Monomere geeignet, beispielsweise Styrol, α-Methylstyrol, p-Methylstyrol, Ethylstyrol, tert.-Butylstyrol, Vinylstyrol, Vinyltoluol, 1,2-Diphenylethylen, 1,1-Diphenylethylen oder deren Mischungen. Styrol und α-Methylstyrol sind bevorzugt, Styrol besonders bevorzugt.

Als Dienmonomere kommen alle polymerisierbaren Diene in Betracht, insbesondere 1,3-Butadien (kurz: Butadien), 1,3-Pentadien, 1,3-Hexadien, 2,3-Dimethylbutadien, Isopren, Piperylen, Chloropren oder Mischungen davon.

Außerdem als Comonomere geeignet sind Nitrilverbindungen wie Acrylnitril oder Methacrylnitril; Acrylate, insbesondere C₁₋₁₂-Alkylacrylate wie n- oder tert.-Butylacrylat oder 2-Ethylhexylacrylat, und die entsprechenden Methacrylate, wie Methylmethacrylat (MMA). Weitere geeignete Comonomere nennt die DE-A 196 33 626 auf Seite 3, Zeilen 5-50 unter M1 bis M10.

Sofern Comonomere verwendet werden, sind sie ausgewählt aus Styrol, α-Methylstyrol, Butadien, Isopren oder deren Mischungen. Besonders bevorzugt ist Styrol. In einer bevorzugten Ausführungsform ist das Oxiran ausgewählt aus Propylenoxid und Ethylenoxid, und das Comonomer ist Styrol.

Der Anteil der Comonomeren am Polymer P2 beträgt üblicherweise 0 bis 99 Gew.-%. Falls man Comonomere verwendet, beträgt ihr Anteil in der Regel 1 bis 99, bevorzugt 10 bis 90, besonders bevorzugt 25 bis 75 Gew.-%, bezogen auf das Copolymer.

Im Schritt 1) des erfindungsgemäßen Verfahrens stellt man aus den Oxiranen und ggf. den Comonomeren durch anionische Polymerisation in Gegenwart eines Metallorganyls ein oder mehrere Oxiranpolymere P1 mit einem gewichtsmittleren Molekulargewicht M1 her.

Die Polymerisation ist erfindungsgemäß anionisch, und als Metallorganyle kommen insbesondere Aluminiumorganyle in Betracht. Als Organyle werden die metallorganischen Verbindungen eines Metalls mit mindestens einer Metall-Kohlenstoff σ-Bindung verstanden, insbesondere die Alkyl- oder Arylverbindungen. Daneben können die Metallorganyle noch Wasserstoff, Halogen oder über Heteroatome gebundene organische Reste, wie Alkoholate oder Phenolate, am Metall enthalten. Letztere sind beispielsweise durch ganze oder teilweise Hydrolyse, Alkoholyse oder Aminolyse erhältlich.

Bezüglich der Aluminiumorganyle besteht die Vorstellung, dass sie als Aktivator und Komplexbildner wirken. Vermutlich aktivieren sie das Oxiran, und sie verbessern die Löslichkeit der Alkalimetallverbindung durch Komplexbildung. Bei dem Oxiran tritt das Aluminiumorganyl möglicherweise in Wechselwirkung mit dessen Epoxidgruppe, öffnet den Epoxidring und ermöglicht auf diese Weise die Polymerisation des Oxirans. Der Mechanismus unterscheidet sich vermutlich grundlegend von dem der anionischen Polymerisation von Styrol oder Butadien, bei der das Aluminiumorganyl als sog. "Retarder" die Polymerisationsgeschwindigkeit verringert.

Als Aluminiumorganyle können insbesondere solche der Formel R₃-Al verwendet werden, wobei die Reste R unabhängig voneinander Wasserstoff, Halogen, C₁₋₂₀-Alkyl, C₆₋₂₀-Aryl oder C₇₋₂₀-Arylalkyl bedeuten. Bevorzugt werden als Aluminiumorganyl, Aluminiumtrialkyle verwendet.

Die Alkylreste können gleich sein, z.B. Trimethylaluminium (TMA), Triethylaluminium (TEA), Tri-iso-butylaluminium (TIBA), Tri-n-butylaluminium, Tri-iso-propylaluminium, Tri-n-hexylaluminium, oder verschieden, z.B. Ethyl-di-iso-butyl-aluminium. Ebenso kann man Aluminiumdialkyle wie Di-isobutylaluminiumhydrid (DiBAH) verwenden.

Als Aluminiumorganyle können auch solche verwendet werden, die durch teilweise oder vollständige Umsetzung von Alkyl-, Arylalkyl- oder Arylaluminiumverbindungen mit Wasser (Hydrolyse), Alkoholen (Alkoholyse), Aminen (Aminolyse) oder Sauerstoff (Oxidation) gebildet werden, oder die Alkoholat-, Thiolat-, Amid-, Imid- oder Phosphit-Gruppen tragen. Durch Hydrolyse werden Aluminoxane erhalten. Geeignete Aluminoxane sind z.B. Methylaluminoxan, isobutyliertes Methylaluminoxan, Isobutylaluminoxan und Tetraisobutyldialuminoxan.

Alkoholyse ergibt Aluminiumalkoholate, auch als Aluminiumalkoxide bezeichnet (z.B. ...propanolat = ...propoxid). Geeignete Alkoholate sind beispielsweise Dimethyl-aluminium-ethanolat, Diethyl-aluminium-ethanolat, Dimethyl-aluminium-iso-propanolat, Dimethyl-aluminium-n-butanolat, Diisobutyl-aluminium-ethanolat, Di-iso-butyl-aluminium-iso-propanolat, Di-iso-butyl-aluminium-n-butanolat. Geeignete Alkoholate sind außerdem solche des 2,6-Di-tert.-butyl-4-methylphenols, auch als Butylhydroxytoluol (BHT) bezeichnet, beispielsweise Methyl-aluminium-bis(2,6-di-tert-butyl-4-methylphenolat) (= Me-Al-(BHT)₂), Isobutyl-aluminium-bis(2,6-di-tert-butyl-4-methylphenolat) (= iBu-Al-(BHT)₂), und Diisobutyl-aluminium-(2,6-di-tert.-butyl-4-methyl-phenolat (= (iBu)₂-Al-BHT, CAS-Nr. 56252-56-3).

Ein geeignetes Aluminiumamid ist z.B. Diethylaluminium-(N,N-dibutylamid). Oxidation ergibt Aluminiumoxide wie etwa Bis(düsobutyl)aiuminiumoxid.

Bei der Alkoholyse werden in Abhängigkeit vom molaren Verhältnis von Aluminiumalkyl R₃-Al zum Alkohol R'OH eine, zwei oder alle drei Alkylgruppen des Aluminiumalkyls durch eine Alkoholatgruppe (Alkoxidgruppe) ersetzt. Es können auch Gemische verschiedener Alkoholate R₂-Al-OR', R-Al-(OR')₂ und Al-(OR')₃ entstehen. Gleiches gilt sinngemäß für Aluminiumaryle bzw. -arylalkyle, und für andere Reaktionspartner als Alkohol. So entstehen z.B. bei Umsetzung zweier verschiedener Aluminiumalkyle R₃-Al und R'₃-Al sowohl Verbindungen R₂-Al-R' als auch R-Al-R'₂.

Durch Umsetzung von Aluminiumalkylen mit mehrwertigen Alkoholen, beispielsweise Dialkoholen sind Alkoholate mit mehreren Al-Atomen erhältlich. So erhält man durch Umsetzung von TIBA mit 1,4-Butandiol (HO-nBu-OH) ein Aluminiumalkoholat iBu-Al-O-nBu-O-Al-iBu, das bevorzugt verwendet werden kann.

Es bedeuten Me Methyl, nBu n-Butyl, iBu iso-Butyl.

In einer bevorzugten Ausführungsform werden als Aluminiumorganyl Aluminiumtrialkyle verwendet. In dieser Ausführungsform können die Aluminiumtrialkyle als einzige Aluminiumverbindung, oder zusammen mit Aluminoxanen, Alkoholaten, Amiden und/oder Oxiden des Aluminiums, verwendet werden. Jedenfalls werden in dieser Ausführungsform keine Aluminoxane, Alkoholate, Amide und/oder Oxide des Aluminiums alleine, d.h. ohne Aluminiumtrialkyle, verwendet. In einer besonders bevorzugten Ausführungsform verwendet man TIBA alleine, oder Ethyl-di-iso-butyl-aluminium alleine.

In einer anderen, ebenfalls besonders bevorzugten Ausführungsform wird zusätzlich zum Aluminiumtrialkyl ein Aluminiumalkoholat mitverwendet, beispielsweise TIBA oder TEA und ein Alkoholat ausgewählt aus Dimethyl-aluminium-iso-propanolat, Dimethyl-aluminium-n-butanolat, Di-iso-butyl-aluminium-iso-propanolat, Di-iso-butyl-aluminium-n-butanolat, oder iBu₂-Al-O-nBu-O-Al-iBu₂.

Man kann zusätzlich zum Aluminiumorganyl auch eine Alkalimetallverbindung mitverwenden. Dies kommt insbesondere dann in Betracht, wenn Comonomere mitverwendet werden, die Oxiranpolymere P1 also Copolymere sind.

Als Alkalimetallverbindung sind alle Verbindungen geeignet, die bei der anionischen Polymerisation als Initiator wirksam sind, insbesondere Alkalimetallhydride und Alkalimetallorganyle, wobei als Alkalimetall beispielsweise Lithium, Natrium oder Kalium geeignet sind. In Betracht kommende Alkalimetallhydride sind insbesondere Lithiumhydrid, Natriumhydrid oder Kaliumhydrid.

Als Alkalimetallorganyle sind bevorzugt die Alkoholate, Hydroxide, Amide, Carboxylate, Aryle, Arylalkyle und Alkyle der Alkalimetalle, geeignet. Geeignete Alkalimetallalkoholate sind solche von Alkoholen mit 1 bis 10 C-Atomen, beispielsweise die Methanolate, Ethanolate, n- und iso-Propanolate, n-, sec- und tert-Butanolate, sowie die Pentanolate. Der Alkoholatrest kann substituiert sein, z.B. mit C₁-C₅-Alkyl oder Halogen. Bevorzugte Alkoholate sind die tert-Amylate (= 2-Methyl-2-butanolate). Besonders bevorzugt verwendet man Kalium-tert-amylat, Natrium-tert-amylat und Natrium-iso-propanolat.

Als Alkalimetallhydroxide kommen beispielsweise Lithiumhydroxid, Natriumhydroxid oder Kaliumhydroxid in Betracht, insbesondere Kaliumhydroxid. Geeignete Alkalimetallamide sind z.B. die Verbindungen M-NH₂. Als Alkalimetallcarboxylate R-COOM können solche von Carbonsäuren mit 1 bis 10 C-Atomen verwendet werden. In beiden Fällen ist M gleich Li, Na oder K.

Geeignete Alkalimetallaryle sind beispielsweise Phenyllithium und Phenylkalium, sowie die multifunktionelle Verbindung 1,4-Dilithiobenzol. Als Alkalimetallarylalkyle sind insbesondere Alkalimetallverbindungen vinylsubstituierter Aromaten geeignet, insbesondere Styrylkalium und Styrylnatrium M-CH=CH-C₆H₅ mit M gleich K oder Na. Sie sind beispielsweise durch Umsetzung des entsprechenden Alkalimetallhydrids mit Styrol und Gegenwart einer Aluminiumverbindung wie TIBA, erhältlich. Ebenso sind oligomere bzw. polymere Verbindungen wie Polystyryl-lithium oder -natrium geeignet, das z.B. durch Vermischen von sec-Butyllithium und Styrol, und anschließende Zugabe von TIBA, erhältlich ist. Weiterhin kann man auch Diphenylhexyllithium oder-kalium verwenden.

Geeignete Alkalimetallalkyle sind solche von Alkanen, Alkenen und Alkinen mit 1 bis 10 C-Atomen, beispielsweise Ethyl-, Propyl-, Isopropyl-, n-Butyl-, sec-Butyl-, tert-Butyl-, Hexamethylendi-, Butadienyl-, Isoprenyl-Lithium, -Natrium oder-Kalium, oder multifunktionelle Verbindungen wie 1,4-Dilithiobutan oder 1,4-Dilithio-2-buten. Wie erwähnt sind Alkalimetallalkyle besonders gut zur Herstellung der Oxiran-Copolymere P1 geeignet: bei der Herstellung der aus Polyoxiranblöcken und Comonomerblöcken aufgebauten Blockcopolymere (siehe weiter unten) können sie vorteilhaft bei der Polymerisation des Comonomerblocks verwendet werden. So kann man z.B. zur Polymerisation des Polystyrolblocks bevorzugt sec-Butyllithium einsetzen.

Wird die Polymerisation als Lösungspolymerisation durchgeführt, richtet sich die Wahl der Alkalimetallverbindung auch nach dem verwendeten Lösungsmittel. Bevorzugt wählt man Alkalimetallverbindung und Lösungsmittel derart, dass sich die Alkalimetallverbindung zumindest teilweise im Lösungsmittel löst.

Aus dem Vorstehenden ergibt sich, dass in einer bevorzugten Ausführungsform die Alkalimetallverbindung ausgewählt ist aus Alkoholaten, Hydriden, Hydroxiden, Amiden, Carboxylen, Arylen, Arylalkylen und Alkylen der Alkalimetalle, oder deren Mischungen. Es versteht sich, dass auch verschiedene Alkalimetallverbindungen verwendet werden können. Die Herstellung der Alkalimetallverbindungen ist bekannt bzw. die Verbindungen sind im Handel erhältlich.

Man kann auch Mischungen verschiedener Alkalimetallverbindungen bzw. Aluminiumorganyle verwenden. Zu den Mengen an Alkalimetallverbindung und Aluminiumorganyl ist Folgendes zu sagen:

Die benötigte Menge an Alkalimetallverbindung - sofern sie mitverwendet wird - richtet sich u.a. nach dem gewünschten Molekulargewicht (Molmasse) des Polymeren P1, das hergestellt werden soll, nach Art und Menge des verwendeten Aluminiumorganyl und nach der Polymerisationstemperatur. In der Regel verwendet man 0,0001 bis 10, bevorzugt 0,0001 bis 5 und besonders bevorzugt 0,0001 bis 2 mol-% Alkalimetallverbindung, bezogen auf die Gesamtmenge der eingesetzten Monomeren.

Wie erwähnt dient das Aluminiumorganyl vermutlich als Aktivator des Oxirans. Daher richtet sich die erforderliche Menge an Aluminiumorganyl u.a. nach Art und Menge des verwendeten Monomeren, dem gewünschten Molekulargewicht (Molmasse) des Polymeren, nach Art und Menge der verwendeten Alkalimetallverbindung und nach der Polymerisationstemperatur.

Das molare Verhältnis von Aluminiumorganyl zu Alkalimetallverbindung kann in weiten Grenzen variieren. Es richtet sich z.B. nach Polymerisationsgeschwindigkeit, der Polymerisationstemperatur, der Art und Menge (Konzentration) der eingesetzten Monomeren, und dem gewünschten Molekulargewicht des Polymeren. Bevorzugt wählt man die Mengen an Aluminiumorganyl und Alkalimetallverbindung derart, dass in der Reaktionsmischung pro ein Mol Alkalimetall 1 bis 100 mol Aluminium vorliegen, d.h. bevorzugt beträgt das Molverhältnis von Aluminium zu Alkalimetall 1:1 bis 100:1. Besonders bevorzugt liegt das Molverhältnis Aluminium zu Alkalimetall bei 2:1 bis 50:1, insbesondere 4:1 bis 10:1. Beispielsweise kann man bei einem Verhältnis von etwa 5:1 arbeiten.

In einer bevorzugten Ausführungsform wählt man die Menge an Aluminiumorganyl derart, dass bezogen auf die Stoffmenge des Oxiran-Monomers, 0,5 bis 20 mol-% Aluminiumorganyl, gerechnet als Aluminiumatome, vorliegen. D.h. bevorzugt werden 0,5 bis 20 mol-% Aluminiumorganyl, gerechnet als Aluminiumatome und bezogen auf die Stoffmenge des Oxirans, verwendet. Besonders bevorzugt setzt man 1 bis 5 mol-% Aluminiumorganyl ein.

Die Zugabe von Alkalimetallverbindung und Aluminiumorganyl kann sowohl zeitlich als auch räumlich betrachtet gemeinsam oder getrennt voneinander, diskontinuierlich auf einmal oder in mehreren Portionen, oder auch kontinuierlich, erfolgen. Insbesondere bei Verwendung von Alkalimetallhydriden als Alkalimetallverbindung kann man Aluminiumorganyl und Alkalimetallhydrid vorab vermischen und diese Mischung zugeben, da das Aluminiumorganyl die Löslichkeit des Alkalimetallhydrids verbessert. Verwendet man mehrere Alkalimetallverbindungen bzw. mehrere Aluminiumorganyle, so kann man sie zeitlich und/oder räumlich gemeinsam oder getrennt voneinander zufügen.

Man kann Alkalimetallverbindung und Aluminiumorganyl als solche zugeben, oder bevorzugt gelöst bzw. dispergiert (emulgiert oder suspendiert) in einem Lösungsmittel bzw. Dispersionsmittel. Dabei kann - muss jedoch nicht - dieses Lösungs- bzw. Dispersionsmittel identisch sein mit dem bei der Polymerisation verwendeten Lösungsmittel, siehe weiter unten.

Bei der Herstellung des Polymers P1 kann man zusätzlich zum Aluminiumorganyl und ggf. der Alkalimetallverbindung, eine quartäre Ammoniumverbindung mitverwenden. Unter quartärer Ammoniumverbindung werden Ammoniumverbindungen verstanden, bei denen alle vier H-Atome des NH₄⁺-Ions durch organische Reste R ersetzt sind. Sie weisen bevorzugt die allgemeine Formel I

R¹R²R³R⁴N-X (I)

auf, wobei die Reste R¹, R², R³ und R⁴ gleich oder verschieden sein können. Formel 1 kann vereinfachend auch als Formel la

NR₄-X (Ia)

geschrieben werden. Es bedeuten

R¹, R², R³, R⁴, bzw. R: gleiche oder verschiedene Alkylreste, Arylreste oder Alkylarylreste mit 1 bis 20 C-Atomen, die unsubstituiert oder substituiert sein können, und die O, S, N, P, Si, Halogen oder andere Heteroatome enthalten können, und

X: ein anorganischer oder organischer Rest, beispielsweise eine anorganische Gruppierung wie Halogen, Cyanid, Hydroxid oder Hydrogencarbonat, oder eine organische Gruppierung wie Alkoholat (Alkoxid), Amin bzw. Alkylamin, oder Carbonsäurereste wie Formiat, Acetat oder Propionat.

Bevorzugt bedeuten R¹, R², R³ und R⁴, bzw. R, gleiches oder verschiedenes Alkyl mit 1 bis 10 C-Atomen, und X Halogen, OH oder ein Alkoholatrest mit 1 bis 10 C-Atomen. Besonders bevorzugt steht R für gleiche Reste, also R¹ = R² = R³ = R⁴. Besonders bevorzugt ist R gleich Ethyl (Et) oder n-Butyl (nBu), und X ist besonders bevorzugt Cl, OH, Acetat oder Isopropanolat (OiPr).

Besonders bevorzugte quartäre Ammoniumverbindungen sind Tetraethylammoniumisopropanolat NEt₄-OiPr, Tetra-n-butylammonium-isopropanolat NnBu₄-OiPr, Tetra-n-butylammonium-hydroxid NnBu₄-OH, Tetra-n-butylammonium-acetat NnBu₄-OOC(CH₃) und ganz besonders bevorzugt Tetra-n-butylammonium-chlorid NnBu₄-Cl sowie Tetra-n-butylammonium-bromid NnBu₄-Br.

Die quartären Ammoniumverbindungen sind im Handel erhältlich, oder können auf einfache, an sich bekannte Weise hergestellt werden. So lassen sich beispielsweise die Isopropanolate aus den entsprechenden handelsüblichen Halogeniden durch Umsetzung mit Isopropanol herstellen.

Die benötigte Menge an quartärer Ammoniumverbindung - sofern sie mitverwendet wird - richtet sich u.a. nach dem gewünschten Molekulargewicht (Molmasse) des Polymeren, das hergestellt werden soll, nach Art und Menge des verwendeten Aluminiumorganyls und ggf. Coinitiators (siehe unten) und nach der Polymerisationstemperatur. In der Regel verwendet man 0,0001 bis 10, bevorzugt 0,0001 bis 5 und besonders bevorzugt 0,0001 bis 2 Mol-% quartäre Ammoniumverbindung, bezogen auf die Gesamtmenge der eingesetzten Monomeren.

Es ist möglich, in einem einzigen Polymerisationsansatz Homopolymere P1 und Copolymere P1 des Oxirans nebeneinander herzustellen. Dabei wird das Mengenverhältnis von Oxirancopolymer zu Oxiranhomopolymer u.a. durch das molare Verhältnis von Alkalimetallverbindung zu quartärer Ammoniumverbindung bestimmt. Üblicherweise erhält man bei äquimolaren Mengen von Alkalimetall- und Ammoniumverbindung, gerechnet als Alkalimetall bzw. Ammoniumstickstoff, ausschließlich oder ganz überwiegend das Copolymer und kein oder nur wenig Homopolymer.

Bei der Herstellung der Polymere P1 können Aminverbindungen mitverwendet werden, die das Alkalimetallatom durch Chelatbildung komplexieren. In Betracht kommen insbesondere tertiäre Aminverbindungen wie N,N,N',N'-Tetramethylmethylendiamin (TMMDA), N,N,N',N'-Tetramethylethylendiamin (TMEDA), N,N,N',N'-Tetramethylpropylendiamin (TMPDA), N,N,N',N'-Tetramethylhexendiamin (TMHDA) und andere N,N,N',N'-Tetraalkyldiamine, sowie Diazabicylco[2,2,2]octan (DABCO). Außerdem sind auch Amine wie Pentamethyldiethylentriamin geeignet.

Um die Effizienz der Kopplung in Schritt 2) zu verbessern, kann man Polypropylenoxid-Homopolymere mit Ethylenoxid funktionalisieren. Dazu fügt man der die lebenden PPO-Ketten enthaltenden Reaktionsmischung monomeres Ethylenoxid hinzu, welches an das PPO anpolymerisiert. Die zur Funktionalisierung erforderliche EO-Menge ist üblicherweise so bemessen, dass die PPO-Kettenenden mit EO funktionalisiert werden.

Bevorzugt werden bei der Herstellung der Oxiranpolymere P1 keine Kronenether und keine Kryptanden mitverwendet. Unter Kronenethern sind makrocyclische Polyether zu verstehen. Sie sind in der Regel planar gebaut, und ihre Sauerstoffatome sind beispielsweise durch Ethylenbrücken verbunden. Zu Kronenethern zählen auch solche, deren Sauerstoffatome ganz oder teilweise durch Heteroatome wie N, P oder S ersetzt sind, und Spheranden, d.h. isocyclische Kohlenstoff-Ringe, die -OH oder andere polare Gruppen tragen, welche alle gleichgerichtet in das Innere eines Hohlraumes zeigen. Unter Kryptanden werden makropolycyclische, mit den Kronenethern verwandte Azapolyether verstanden, in denen zwei Brückenkopf-Stickstoffatome durch ein oder mehrere Sauerstoffatome enthaltende Brücken verbunden sind. Näheres siehe Römpp, Stichworte "Kronenenter" und "Kryptanden". Bevorzugt verwendet man Kronenether bzw. Kryptanden weder als Reagenz noch als Begleitstoff (z.B. Lösungsmittel).

Man kann die Oxiranpolymere P1 in Abwesenheit oder - bevorzugt - in Gegenwart eines Lösungsmittels herstellen. Bevorzugt ist das verwendete Lösungsmittel unpolar und enthält keine Sauerstoffatome oder andere die Polarität erhöhende Heteroatome. Die Polymerisation erfolgt besonders bevorzugt in einem aliphatischen, isocyclischen oder aromatischen Kohlenwasserstoff oder Kohlenwasserstoffgemisch, wie Benzol, Toluol, Ethylbenzol, Xylol, Cumol, Hexan, Heptan, Octan oder Cyclohexan. Bevorzugt werden Lösungsmittel mit einem Siedepunkt oberhalb 70°C verwendet. Besonders bevorzugt wird Heptan, Toluol oder Cyclohexan verwendet.

Nach Beendigung der Polymerisation, d.h. nach Verbrauch der Monomeren, wird die Reasktion üblicherweise nicht durch Zugabe eines Kettenabbruchmittels abgebrochen. Vielmehr wird die "lebende" Reaktionsmischung bevorzugt unmittelbar in Schritt 2) eingesetzt. Lebend bedeutet, dass bei erneuter Monomerzugabe die Polymerisationsreaktion an den lebenden Polymerkettenenden sofort wieder anspringen würde, ohne dass erneut Polymerisationsinitiator zugegeben werden müsste.

Die Polymerisationsbedingungen in Schritt 1), z.B. Druck und Temperatur richten sich u.a. nach der Reaktivität und Konzentration der Monomere, den verwendeten Alkalimetall- und Aluminiumverbindungen und ihren Konzentrationen. Üblicherweise arbeitet man bei 0,1 bis 10, insbesondere 0,5 bis 5 bar Absolutdruck, besonders bevorzugt bei Normaldruck , und bei -50 bis 200, insbesondere -30 bis 100 und besonders bevorzugt -10 bis 50°C Reaktionstemperatur. Tiefe Temperaturen ermöglich eine bessere Kontrolle der Reaktion, jedoch ist die Polymerisationszeit länger. Die Polymerisationsdauer beträgt üblicherweise 5 min bis 48 Stunden, insbesondere 10 min bis 12 Stunden.

Das Verfahren zur Herstellung der Oxiranpolymere P1 kann diskontinuierlich oder kontinuierlich, in jedem üblichen Behälter bzw. Reaktor durchgeführt werden, wobei es grundsätzlich möglich ist, rückvermischende oder nicht rückvermischende Reaktoren (d.h. Reaktoren mit Rührkessel- oder Rohrreaktor-Verhalten) zu verwenden. Das Verfahren führt je nach Wahl der Alkalimetallverbindung und des Aluminiumorganyls, deren Konzentrationen, des speziell angewandten Verfahrensablaufs (z.B. Zugabereihenfolge) und anderer Parameter, wie Polymerisationsdauer und -temperatur und evtl. Temperaturverlauf, zu Polymerisaten unterschiedlichen Molekulargewichts. Geeignet sind zum Beispiel Rührkessel, Turmreaktoren, Schlaufenreaktoren sowie Rohrreaktoren oder Rohrbündelreaktoren mit oder ohne Einbauten. Einbauten können statische oder bewegliche Einbauten sein.

Die erhaltenen Oxiranpolymere P1 können Homo- oder Copolymere sein. Bevorzugt weisen die Oxiranhomopolymere P1 ein gewichtsmittleres Molekulargewicht (Mw) M1 von 1000 bis 300.000, insbesondere 5000 bis 200.000 g/mol auf.

Die Copolymere können statistisch aufgebaut sein, d.h. die Abfolge der Monomereinheiten im Copolymer ist rein statistisch, oder alternierend (abwechselnd Oxiran- und Comonomereinheiten). Sie können ebenso eine tapered-Struktur aufweisen. Tapered bedeutet, dass entlang der Polymerkette ein Gradient von Oxiran-reich nach Oxiranarm oder umgekehrt vorliegt.

Bevorzugt jedoch weisen die Oxirancopolymere P1 eine Blockstruktur auf, es handelt sich also um Blockcopolymere. Bevorzugt sind die Blockcopolymere aufgebaut aus mindestens einem Block aus dem oder den Oxiranen, und mindestens einem Block aus dem oder den Comonomeren. Besonders bevorzugt sind die Blockcopolymere linear aufgebaut.

Die erfindungsgemäßen Blockcopolymere können z.B. lineare Zweiblock-Copolymere A-B sein. Dabei steht A für den Polyoxiran-Block und B für den Block aus Comonomer(en). Für Styrol als bevorzugtes Comonomer ist B demnach ein Polystyrolblock.

Die Blockstruktur entsteht im Wesentlichen dadurch, dass man zunächst das Comonomer alleine anionisch polymerisiert, wodurch ein "lebender" Block B aus dem Comonomer entsteht. Nach Verbrauch des Comonomeren wechselt man das Monomere, indem man monomeres Oxiran zufügt und anionisch zu einem Oxiranblock A polymerisiert, d.h. an den lebenden Comonomerblock wird ein Polyoxiranblock anpolymerisiert. Beispielsweise kann man zunächst Styrol alleine zu einem Polystyrolblock PS polymerisieren. Nach Verbrauch des Styrols erfolgt der Monomerwechsel, indem man Propylenoxid zufügt, das dann zum Polypropylenoxid-Block PPO polymerisiert wird. Als Ergebnis dieser sog. sequentiellen Polymerisation erhält man ein Zweiblockpolymer B-A, z.B. PS-PPO.

Bevorzugt handelt es sich demnach bei den Oxirancopolymeren P1 um Blockcopolymere, wobei durch sequentielle Polymerisation zunächst das Comonomer zu einem Polymerblock B polymerisiert wird, und danach das Oxiran zu einem Polyoxiranblock A polymerisiert wird.

Bei der Herstellung der Blockcopolymere können sowohl die Alkalimetallverbindung als auch eine Teilmenge des Aluminiumorganyls bereits bei der Polymerisation des ersten Blocks zugegeben werden. Jedoch kann man insbesondere dann, wenn - wie es bevorzugt ist - zunächst der Comonomer-Block und danach der Polyoxiran-Block hergestellt wird, den Comonomerblock in Gegenwart der Alkalimetallverbindung polymerisieren (d.h. ohne Aluminiumorganyl) und das Aluminiumorganyl erst bei der Polymerisation des Polyoxiranblocks zufügen.

Beispielsweise kann man zunächst aus Styrol mittels Alkalimetallverbindung (z.B. sec-Butyllithium) den Polystyrolblock herstellen, und erst bei der Zugabe des Oxiranmonomers das Aluminiumorganyl (z.B. TIBA) zufügen und zum Polyoxiranblock polymerisieren. Besonders bevorzugt gibt man nach der Herstellung des Comonomerblocks erst das Oxiranmonomer, und nach dem Anspringen der Reaktion, in manchen Fällen sichtbar an einer Verfärbung der Reaktionsmischung, das Aluminiumorganyl hinzu.

Bei der Herstellung der Blockcopolymere beträgt das Molverhältnis von Aluminium zu Alkalimetall üblicherweise 0,5:1 bis 100:1. Bevorzugt wird zumindest das Oxiranmonomer bei einem molaren Überschuss von Aluminium gegenüber Alkalimetall, polymerisiert. Insbesondere beträgt zumindest bei der Polymerisation des Polyoxiranblocks A das Molverhältnis von Aluminium zu Alkalimetall 1:1 1 bis 20:1.

Bevorzugte Oxiranpolymere P1 sind Zweiblockcopolymere PS-PPO. Dabei kann im PPO-Block ein Teil des PO durch EO ersetzt sein. Besonders bevorzugt beträgt der Anteil der Polystyrolblöcke an einem solchen Blockcopolymer 2 bis 90, vorzugsweise 25 bis 75 Gew.-%, gerechnet als Summe aller Polystyrolblöcke im Blockcopolymer und bezogen auf das Blockcopolymer.

Man kann auch Blockcopolymere herstellen, die neben einem Polyoxiranblock und einem Block aus Styrolmonomeren, einen oder mehrere Blöcke aus Dienmonomeren enthalten. Beispielsweise kann man Dreiblockcopolymere PBu-PS-PPO (PBu = Polybutadienblock) herstellen, indem man zunächst Butadien anionisch zu einem Polybutadienblock, danach Styrol wie beschrieben zum Polystyrolblock und schließlich PO zum PPO-Block polymerisiert. Durch Vertauschen der Monomerfolge lassen sich auch Blockcoplymere PS-PBu-PPO herstellen. Anstelle oder zusammen mit Butadien kann man auch Isopren oder andere Diene verwenden. Bevorzugt wird unabhängig von der Blockabfolge der Polyoxiranblock als letzter Block polymerisiert.

Unabhängig davon, ob die Oxirancopolymere P1 statistisch oder als Blockcopolymer aufgebaut sind, liegt ihr gewichtsmittleres Molekulargewicht M1 üblicherweise bei 1000 bis 500.000, bevorzugt 5000 bis 300.000 und besonders bevorzugt 10.000 bis 200.000 g/mol.

Bei Blockcopolymeren als Oxirancopolymer P1 weist bevorzugt der einzelne Polyoxiranblock ein gewichtsmittleres Molekulargewicht von 1000 bis 300.000 g/mol, und der einzelne Polystyrolblock ein zahlenmittleres Molekulargewicht von 1000 bis 200.000 g/mol, auf.

In Schritt 2) des erfindungsgemäßen Verfahrens setzt man die in Schritt 1) erhaltenen Oxiranpolymere P1 mit einem Kopplungsmittel zu dem Polymer P2 mit einem gewichtsmittleren Molekulargewicht M2 um. Dabei ist M2 größer als das gewichtsmittlere Molekulargewicht M1 der Polymere P1.

Erfindungsgemäß ist das Kopplungsmittel ein aromatisches oder aliphatisches Isocyanat, das mindestens zwei Isocyanatgruppen (-N=C=O) pro Molekül aufweist. Bevorzugt beträgt die Anzahl der Isocyanatgruppen 2, 3 oder 4, besonders bevorzugt 2 oder 3 und insbesondere 2, d.h. die Diisocyanate sind ganz besonders bevorzugt.

Bevorzugte Kopplungsmittel sind
- die Toluylendiisocyanate (= Toluoldiisocyanate, TDI), beispielsweise Toluylen-2,4-diisocyanat und Toluylen-2,6-diisocyanat,
- Hexan-1,6-diisocyanat (= Hexamethylendiisocyanat, HDI oder HMDI)
- Naphthylen-1,5-diisocyanat (NDI),
- Diphenylmethan-4,4'-diisocyanat (= 4,4'-Methylendi(phenylisocyanat), MDI),
- Dicyclohexylmethan-4,4'-diisocyanat (= 4,4'-Methylenbis(cyclohexylisocyanat), H₁₂MDI),
- 5-Isocyanato-1-isocyanatomethyl-1,3,3-trimethyl-cyclohexan (= Isophorondiisocyanat, IPDI).

Ebenso kommen als Kopplungsmittel solche Isocyanatverbindungen in Betracht, die durch Umsetzung von Monoisocyanaten oder anderen Isocyanaten mit sich selbst und beispielsweise Alkoholen, Aminen oder erhalten werden, z.B.:
- Allophanate, erhältlich durch Umsetzung eines Isocyanats mit einem Alkohol, und Umsetzung des erhaltenen Urethans mit weiterem Isocyanat,
- Biurete, erhältlich durch Umsetzung eines Isocyanats mit Harnstoffderivaten,
- Uretdione, erhältlich durch Umsetzung von 2 mol Isocyanat,
- Isocyanurate, erhältlich durch Umsetzung von 3 mol Isocyanat.

Derartige Isocyanatverbindungen werden z.B. im Römpp, Stichwort "Polyisocyanate", beschrieben.

Bevorzugte Isocyanat-Kopplungsmittel sind die Toluylendiisocyanate (= Toluoldiisocyanate, TDI), beispielsweise als kommerziell erhältliche Isomerengemische 80:20 oder 65:35 (2,4-Isomer : 2,6-Isomer).

Das Kopplungsmittel kann als solches, oder gelöst in einem geeigneten Lösungsmittel wie z.B. Toluol, Ethylbenzol, Cyclohexan oder einem anderen aliphatischen, isocyclischen oder aromatischen Kohlenwasserstoff oder Kohlenwasserstoffgemisch, zugefügt werden.

Die Polymerisationsbedingungen in Schritt 2), z.B. Druck und Temperatur richten sich u.a. nach der Reaktivität und Konzentration der Polymere P1 und des Kopplungsmittels. Üblicherweise arbeitet man bei 0,1 bis 10, insbesondere 0,5 bis 5 bar Absolutdruck, besonders bevorzugt bei Normaldruck , und bei -50 bis 200, insbesondere -30 bis 100 und besonders bevorzugt -10 bis 80°C Reaktionstemperatur. Die Polymerisationsdauer beträgt üblicherweise 5 min bis 48 Stunden, insbesondere 10 min bis 12 Stunden.

Das Umsetzung zum Polymer P2 kann diskontinuierlich oder kontinuierlich, in jedem üblichen Behälter bzw. Reaktor durchgeführt werden, wobei es grundsätzlich möglich ist, rückvermischende oder nicht rückvermischende Reaktoren (d.h. Reaktoren mit Rührkessel- oder Rohrreaktor-Verhalten) zu verwenden. Geeignet sind zum Beispiel Rührkessel, Turmreaktoren, Schlaufenreaktoren sowie Rohrreaktoren oder Rohrbündelreaktoren mit oder ohne Einbauten. Einbauten können statische oder bewegliche Einbauten sein.

Es besteht die Vorstellung, dass in Schritt 2) die lebenden anionischen Kettenenden des Oxiranpolymers P1 mit den C-Atomen der Isocyanatgruppen reagieren. Dabei bildet sich vermutlich ein Anion, dessen N-Atome der Isocyanatgruppen eine negative Ladung aufweisen, schematisch

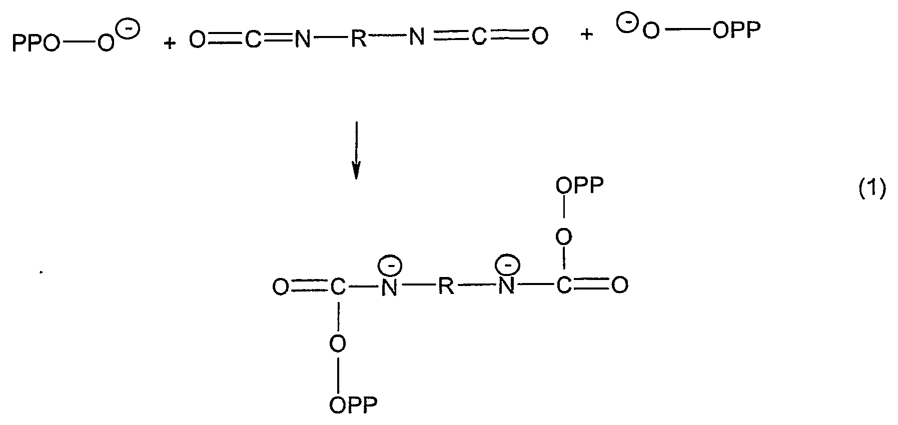

Dabei bedeutet PPO eine Polypropylenoxid-Kette (PPO-Block). Sie trägt ein negativ geladenes O-Atom -O⁻ am Kettenende. R bedeutet den aromatischen bzw. aliphatischen Rest des Isocyanats.

Das Nitranion ist reaktiv, d.h. das in (1) erhaltene Polymermolekül ist offenbar ein lebendes Molekül. Dieser Mechanismus unterscheidet sich grundlegend von dem der Polyurethansynthese, bei der durch Polyaddition aus zwei- oder höherwertigen Alkoholen und Isocyanaten, Polyurethane gebildet werden.

Die erforderliche Menge an Kopplungsmittel richtet sich nach der Anzahl Isocyanatgruppen pro Isocyanatmolekül und nach dem gewünschten Aufbau des Polymeren P2. Beispielsweise verwendet man gemäß der obigen Gleichung (1) pro 1 mol Oxiranpolymer P1, 0,5 mol eines Diisocyanats, um das Polymer P2 zu erhalten. P2 hat üblicherweise etwa das doppelte Molekulargewicht von P1. Es besteht die Vorstellung, dass das Polymer P2 zwei Äste aus Oxiranpolymer P1 aufweist, die über das Kopplungsmittel gekoppelt sind.

Verwendet man als Kopplungsmittel ein Isocyanat mit drei Isocyanatgruppen, so erhält man in ähnlicher Weise ein Polymer P2 mit drei Polymerästen, wozu pro 1 mol Oxiranpolymer Pol, 1/3 mol Triisocyanat verwendet werden. Entsprechendes gilt sinngemäß für Polymere P2 mit mehr als drei Ästen bzw. für Isocyanate mit mehr als drei Isocyanatgruppen.

Je nachdem, ob die in Schritt 1) des Verfahrens hergestellten Oxiranpolymere P1 Homopolymere oder Copolymere, z.B. Blockcopolymere sind, erhält man als Polymer P2 ein Oxiran-Homopolymer oder -Copolymer.

Nachfolgend steht PPO (Polypropylenoxid) stellvertretend für ein Oxiranhomopolymer bzw. Oxiranhomopolymerblock, PS (Polystyrol) stellvertretend für ein Polymer bzw. Polymerblock aus Comonomeren, und X stellvertretend für ein Isocyanat-Kopplungsmittel.

In einer bevorzugten Ausführungsform i) ist das Verfahren dadurch gekennzeichnet, dass man in Schritt 1) ein Oxiran-Homopolymer P1 herstellt und dieses in Schritt 2) mit dem Kopplungsmittel zu einem Polymer P2 mit zwei oder mehr Ästen aus OxiranHomopolymer umsetzt, schematisch:

2 PPO + X → PPO-X-PPO (2)

In einer anderen, ebenfalls bevorzugten Ausführungsform ii) ist das Verfahren dadurch gekennzeichnet, dass man in Schritt 1) ein Oxiran-Blockcopolymer P1 herstellt und dieses in Schritt 2) mit dem Kopplungsmittel zu einem Blockcopolymer P2 umsetzt, schematisch:

2 PS-PPO + X → PS-PPO-X-PPO-PS (3)

Eine besonders bevorzugte Ausführungsform ii) ist dadurch gekennzeichnet, dass man in Schritt 1) ein Zweiblockcopolymer P1 Polypropylenoxid-Polystyrol PPO-PS herstellt und dieses in Schritt 2) zu einem Blockcopolymer P2 PS-PPO-PPO-PS umsetzt.

Die Schreibweise PPO-X-PPO bzw. PPO-PPO dient der Verdeutlichung; tatsächlich dürfte das Kopplungsmittel X aufgrund seiner im Vergleich zu den PPO-Blöcken sehr geringen Masse für den Polymereigenschaften nicht wesentlich sein, und man kann PPO-X-PPO bzw. PPO-PPO als einen einheitlichen Block PPO* betrachten, der etwa doppelt so groß ist wie die beiden einzelnen PPO-Blöcke.

In einer Abwandlung ii') dieser Ausführungsform ii) stellt man zunächst in Schritt 1) ein Oxiran-Blockcopolymer PPO-PS, und getrennt davon in einem Schritt 1') ebenfalls durch anionische Polymerisation in einer separaten Reaktion ein Polystyrol-Homopolymer PS her, und setzt diese beiden Polymere P1 in Schritt 2) mit dem Kopplungsmittel um, schematisch:

PS + PPO-PS + X → PS-X-PPO-PS (4)

Das gemäß Gleichung (4) erhaltene Produkt kann unter Vernachlässigung des Kopplungsmittels X auch als PS-PPO-PS geschrieben werden.

Wie erwähnt besteht die Vorstellung, dass die in Schritt 2) erhaltenen Polymere P2 lebende Polymere (Nitranionen) sind. Sofern diese Polymere das gewünschte Endprodukt darstellen, bricht man üblicherweise die Reaktion durch Zugabe eines Kettenabbruchmittels ab.

Als Abbruchmittel kommen alle protonenaktiven Substanzen, und Lewis-Säuren, in Betracht. Geeignet sind beispielsweise Wasser, sowie C₁-C₁₀-Alkohole wie Methanol, Ethanol, Isopropanol, n-Propanol und die Butanole. Ebenfalls geeignet sind aliphatische und aromatische Carbonsäuren wie 2-Ethylhexansäure, sowie Phenole. Auch anorganische Säuren wie Kohlensäure (Lösung von CO₂ in Wasser) und Borsäure können verwendet werden. Bevorzugt wird als Abbruchmittel Ethanol verwendet.

Alternativ zum Abbruch, kann man die in Schritt 2) erhaltenen Polymere P2 in einem anschließenden Schritt 3) mit geeigneten Reaktionspartnern zu Polymeren P3 umsetzen, d.h. P3 ist das Endprodukt. Dies beschreiben die nachfolgenden Ausführungsformen iii) und iv). Aufgrund des lebenden Charakters der Polymere P2 ist dazu in der Regel keine Reinitiierung erforderlich, vielmehr wird die Reaktion durch einfache Zugabe des Reaktionspartners fortgeführt.

In der bevorzugten Ausführungsform iii) kann man der in Schritt 2) erhaltenen Reaktionsmischung erneut Isocyanat als Reaktionspartner zufügen. Auf diese Weise erhält man ein Pfropfpolymer P3. Demnach ist in dieser bevorzugten Ausführungsform iii) das Verfahren dadurch gekennzeichnet, dass man nach Schritt 2)
3) in einem Schritt 3) das Polymer P2 mit weiterem Isocyanat zu einem Pfropfpolymer P3 umsetzt.
   Es besteht die Vorstellung, dass die Reaktion an den negativ geladenen N-Atomen des Kopplungsmittels abläuft, schematisch wie folgt:

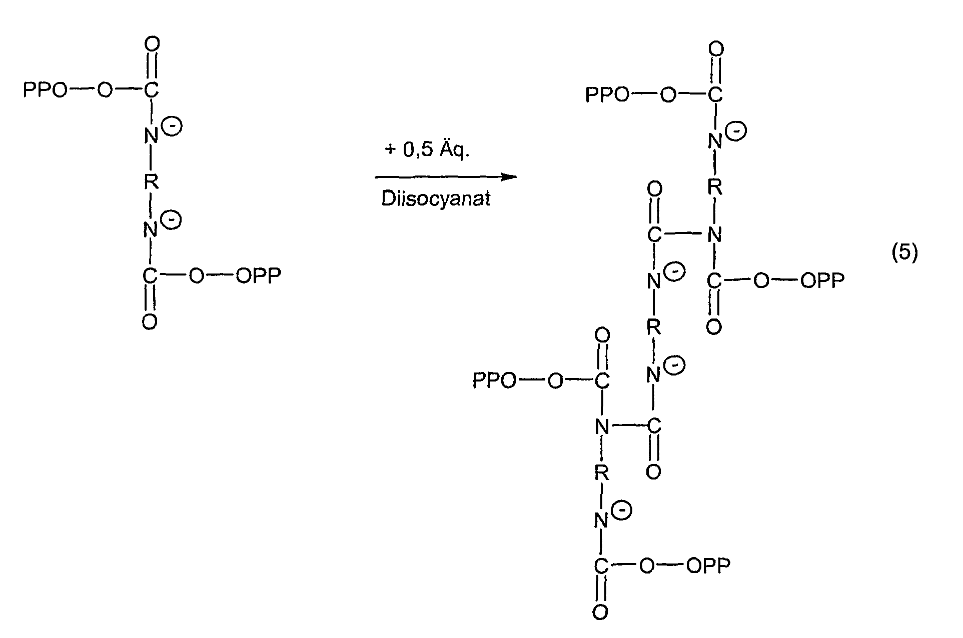

Das erhaltene Pfropfpolymer hat eine Pfropfgrundlage aus dem Isocyanat und darauf gepfropfte Äste aus Polyoxiran. Daher ist das Verfahren bevorzugt dadurch gekennzeichnet, dass das Pfropfpolymer P3 eine Pfropfgrundlage aus Isocyanatresten und eine Pfropfauflage (Pfropfäste) aus Oxiranpolymeren aufweist.

Das in Schritt 3) dieser Ausführungsform iii) verwendete Isocyanat kann mit dem in Schritt 2) verwendeten identisch sein - dies ist bevorzugt - oder davon verschieden. Die in Schritt 3) erforderliche Menge an Isocyanat richtet sich nach dem gewünschten Aufbau des Polymers P3, insbesondere nach dem Verhältnis von Pfropfgrundlage zu Pfropfauflage und kann durch Vorversuche auf einfache Weise ermittelt werden. Bevorzugt setzt man das Isocyanat in stöchiometrischen Mengen ein, z.B. 0,5 mol Diisocyanat pro 1 mol des Polymers P2.

Alternativ kann man in einer bevorzugten Ausführungsform iv) der in Schritt 2) erhaltenen Reaktionsmischung erneut Isocyanat und außerdem Oxiranmonomer als Reaktionspartner zugeben (statt Isocyanat alleine), wodurch man ein vernetztes Polymer P3 erhält. In dieser Ausführungsform iv) ist das Verfahren dadurch gekennzeichnet, dass man nach Schritt 2)
3) in einem Schritt 3) das Polymer P2 mit weiterem Isocyanat und weiterem Oxiran zu einem vernetzten Polymer P3 umsetzt.
   Das erhaltene Polymer enthält Isocyanatreste, die mit Ketten aus Oxiranhomo- oder - copolymer zu einem Polymergel räumlich verknüpft (vernetzt) sind. Das Verfahren ist also bevorzugt dadurch gekennzeichnet, dass das vernetzte Polymer P3 Isocyanatreste aufweist, die über Oxiranpolymere dreidimensional verknüpft sind.

Das in Schritt 3) dieser Ausführungsform iv) verwendete Isocyanat bzw. Oxiranmonomer können mit dem in Schritt 2) verwendeten Isocyanat bzw. Oxiran identisch sein - dies ist bevorzugt - oder davon verschieden. Die in Schritt 3) erforderliche Menge an Isocyanat und Oxiranmonomer richtet sich nach dem gewünschten Aufbau des Polymers P3, insbesondere nach dem gewünschten Vernetzungsgrad und kann durch Vorversuche auf einfache Weise ermittelt werden. Bevorzugt wird das Isocyanat, anders als bei der Herstellung der Pfropfpolymere P3, im Überschuss verwendet.

Danach wird die Reaktion üblicherweise durch Zugabe eines Kettenabbruchmittels abgebrochen wie bereits beschrieben.

Die erhaltene Reaktionsmischung enthält das Polymer P2 bzw. P3 und kann nach dem Abbruch, falls gewünscht, in an sich bekannter Weise auf das Polymer P2 bzw. P3 aufgearbeitet werden. Beispielsweise kann man das Polymer, falls erforderlich, durch Zugabe von Methanol oder anderen geeigneten Verbindungen zur Reaktionsmischung, ausfällen und abtrennen. Das Polymer kann in einem Entgasungsextruder oder Verdampfer entgast werden. Durch die Entgasung werden Restmonomere und gebildete Oligomere, sowie bei der Polymerisation verwendete flüchtige Hilfs- und Begleitstoffe sowie insbesondere das Lösungsmittel, abgetrennt.

Das gewichtsmittlere Molekulargewicht M2 des Polymers P2 bzw. P3 ergibt sich aus den Molekulargewichten M1 der Polymerblöcke bzw. -äste P1, aus denen die Polymere P2 bzw. P3 aufgebaut sind, und dem einpolymerisierten Kopplungsmittel. Üblicherweise beträgt M2
- für Homopolymere P2, 2000 bis 1.000.000, bevorzugt 5000 bis 300.000 g/mol,
- für Blockcopolymere P2, 2000 bis 1.000.000, bevorzugt 5000 bis 300.000 g/mol, und
- für Pfropfpolymere P3, 5000 bis 10.000.000, bevorzugt 10.000 bis 5.000.000 g/mol.

Zusammenfassend ermöglicht es das erfindungsgemäße Verfahren,
i) aus Oxiran-Homopolymeren P1 durch Kopplung mit Isocyanat, OxiranHomopolymere P2 herzustellen,
ii) aus Oxiran-Copolymeren P1 durch Kopplung mit Isocyanat, Oxiran-Copolymere P2 herzustellen, insbesondere aus Blockcopolymeren P1 Blockcopolymere P2 herzustellen,
iii) aus den Homo- oder Copolymeren P2 durch erneute Umsetzung mit Isocyanat, Pfropfpolymere P3 herzustellen, oder
iv) aus den Homo- oder Copolymeren P2 durch erneute Umsetzung mit Isocyanat und Oxiranmonomer, vernetzte Polymere P3 herzustellen.

Die nach dem erfindungsgemäßen Verfahren erhältlichen Polymere P2 bzw. P3 sind ebenfalls Gegenstand der Erfindung. Die Polymere können außerdem übliche Zusatzstoffe und Verarbeitungshilfsmittel in den dafür üblichen Mengen enthalten, beispielsweise Gleit- oder Entformungsmittel, Farbmittel wie z.B. Pigmente oder Farbstoffe, Flammschutzmittel, Antioxidantien, Stabilisatoren gegen Lichteinwirkung, Antistatika, oder faser- und pulverförmige Füll- oder Verstärkungsmittel, sowie andere Zusatzstoffe, oder deren Mischungen.

Das Abmischen der Polymere mit den Zusatzstoffen kann nach an sich bekannten Mischverfahren erfolgen, beispielsweise unter Aufschmelzen in einem Extruder, Banbury-Mischer, Kneter, Walzenstuhl oder Kalander. Die Komponenten können jedoch auch "kalt" verwendet werden und das pulvrige oder aus Granulaten bestehende Gemisch wird erst bei der Verarbeitung zum Endprodukt, z.B. Formteil, Folie, Faser oder Schaum, aufgeschmolzen und homogenisiert.

Aus den erfindungsgemäßen Polymeren lassen sich Formkörper (auch Halbzeuge) Folien, Fasern und Schäume aller Art herstellen.

Gegenstand der Erfindung sind demnach auch die Verwendung der erfindungsgemäßen Polymere zur Herstellung von Formkörpern, Folien, Fasern und Schäumen, sowie die aus den Polymerblends erhältlichen Formkörper, Folien, Fasern und Schäume.

Mit dem erfindungsgemäßen, alternativen Verfahren lassen sich Oxiranpolymere auf einfache Weise herstellen, insbesondere solche mit höherem Molekulargewicht. Außerdem macht das Verfahren Dreiblockcopolymere des Typs B-A-B, beispielsweise PS-PPO-PS, auf einfache Weise zugänglich, und es lassen sich auch Pfropfpolymere und vernetzte Polymere (Polymernetzwerke bzw. Polymergele) herstellen.

### Beispiele:

Es wurden die nachfolgend genannten Verbindungen verwendet, wobei "gereinigt" bedeutet, dass mit Aluminoxan gereinigt und getrocknet wurde, sofern nicht anders angegeben. Handelsprodukte wurden ohne weitere Reinigung verwendet.
- Styrol, gereinigt
- Propylenoxid (PO), gereinigt durch Behandeln mit Calciumhydrid
- Cyclohexan, gereinigt
- Ethanol (als Abbruchmittel)
- sec-Butyllithium (sBuLi) als 1,3 molare Lösung in Cyclohexan; es wurde eine fertige Lösung von Fa. Aldrich verwendet
- Tetra-n-butylammoniumchlorid (NnBu₄-Cl); es wurde aus dem entsprechenden Hydrat (NnBu₄-Cl • H₂O, als 98%iger Feststoff von Fa. Aldrich) durch Behandeln mit Methanol und anschließende Vakuumtrocknung erhalten
- Triisobutylaluminium (TIBA, iBu₃-Al) als 1,0 molare Lösung in Toluol; es wurde eine fertige Lösung von Fa. Aldrich verwendet,
- Toluylen-2,4-diisocyanat (TDI, als erfindungsgemäßes Kopplungsmittel); das Handelsprodukt (Reinheit 95 % von Fa. Aldrich) wurde durch Kryodestillation gereinigt. Es wurden TDI-Lösungen verschiedener Konzentration in Toluol hergestellt.

Die folgenden nicht erfindungsgemäßen Kopplungsmittel Y1 bis Y4 wurden zum Vergleich verwendet:

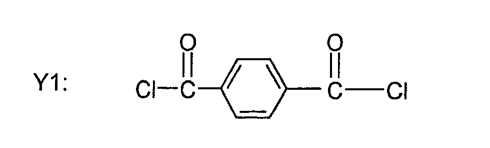

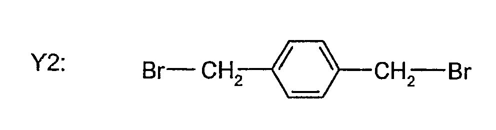

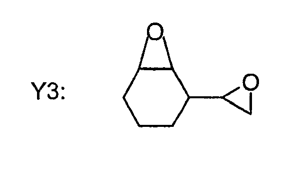

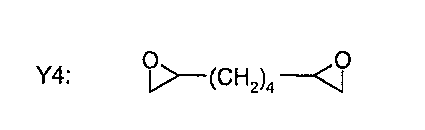

Alle Polymerisationen wurden unter Feuchtigkeitsausschluss in einer glove box mit Stickstoffatmosphäre durchgeführt. Es wurde ein mit Magnetrührer und Septum ausgestatteter, temperierbarer Rundkolben verwendet. Während der Polymerisation wurde gerührt und die Abnahme der Monomerkonzentration gravimetrisch verfolgt.

Die Molekulargewichte und Molekulargewichtsverteilungen der Polymermischungen wurden durch Gelpermeationschromatographie (GPC) bestimmt mit Tetrahydrofuran als Eluent und Kalibration mit Polystyrolstandards. Dazu wurde der zu untersuchenden Reaktionsmischung eine Probe entnommen, darin die Reaktion durch Zugabe von 10 ml Ethanol abgebrochen und die Probe untersucht. Aus dem zahlenmittleren Molekulargewicht Mn und dem gewichtsmittleren Molekulargewicht Mw wurde der Polydispersitätsindex PDI = Mw/Mn, bestimmt.

Nachfolgend entspricht die Nummerierung 1), 2) und 3) ungefähr den Schritten 1), 2) bzw. 3) des erfindungsgemäßen Verfahrens.

### Beispiel 1: PPO-Homopolymer 23.000 g/mol

1) Zu 12,5 ml Toluol wurden 42,7 mg (0,154 mmol) festes NnBu₄-Cl gegeben. Danach fügte man 3 ml PO und 0,22 ml der 1,0 molaren TIBA-Lösung hinzu. Es wurde 60 min bei 0°C polymerisiert.
   Von der Reaktionsmischung wurde eine Probe genommen und mit GPC untersucht. Die Ergebnisse waren wie folgt: Polydispersitätsindex (PDI) 1,15, zahlenmittleres Molekulargewicht Mn 13.000 g/mol.
2) Zu der restlichen, noch lebenden Reaktionsmischung gab man 0,55 ml einer 0,14 molaren TDI-Lösung in Toluol, und polymerisierte 3 Stunden bei 60°C.
   Danach wurde durch Zugabe von 10 ml Ethanol abgebrochen und die Reaktionsmischung mit GPC untersucht. Die Ergebnisse waren wie folgt: Polydispersitätsindex (PDI) 1,18, zahlenmittleres Molekulargewicht Mn 23.000 g/mol. Ein zweiter GPC-Peak mit ca. 50 % des Integrals wurde dem ungekoppelten PPO zugeordnet.

### Beispiel 2: PPO-Homopolymer 46.600 g/mol

1) Zu 10 ml Toluol wurden 31,1 mg (0,112 mmol) festes NnBu₄-Cl gegeben. Danach fügte man 3,6 ml PO und 0,28 ml der 1,0 molaren TIBA-Lösung hinzu. Es wurde 60 min bei 0°C polymerisiert.
   Von der Reaktionsmischung wurde eine Probe genommen und mit GPC untersucht. Die Ergebnisse waren wie folgt: Polydispersitätsindex (PDI) 1,06, zahlenmittleres Molekulargewicht Mn 26.700 g/mol.
2) Zu der restlichen, noch lebenden Reaktionsmischung gab man 0,4 ml einer 0,23 molaren TDI-Lösung in Toluol, und polymerisierte 60 min bei 0°C.
   Danach wurde durch Zugabe von 10 ml Ethanol abgebrochen und die Reaktionsmischung mit GPC untersucht. Die Ergebnisse waren wie folgt: Polydispersitätsindex (PDI) 1,10, zahlenmittleres Molekulargewicht Mn 46.600 g/mol. Ein zweiter GPC-Peak mit ca. 5 % des Integrals wurde dem ungekoppelten PPO zugeordnet.

### Beispiel 3: Pfropfpolymer 130.800 g/mol

1) + 2) Es wurde vorgegangen wie in Beispiel 2 beschrieben, jedoch wurde die Reaktion nicht durch Zugabe von Ethanol abgebrochen.
3) Stattdessen gab man 0,4 ml einer 0,23 molaren TDI-Lösung in Toluol, hinzu, und polymerisierte 24 Stunden bei 20°C.
   Danach wurde durch Zugabe von 10 ml Ethanol abgebrochen und die Reaktionsmischung mit GPC untersucht. Die Ergebnisse waren wie folgt: Polydispersitätsindex (PDI) 1,41, zahlenmittleres Molekulargewicht Mn 130.800 g/mol. Ein zweiter GPC-Peak mit ca. 5 bis 10 % des Integrals wurde dem ungekoppelten PPO zugeordnet; ein dritter GPC-Peak mit ca. 10 bis 20 % des Integrals wurde dem gekoppelten, aber ungepfropften PPO zugeordnet.

### Beispiel 4: vernetztes Polymer

1) + 2) Es wurde vorgegangen wie in Beispiel 2 beschrieben, jedoch wurde die Reaktion nicht durch Zugabe von Ethanol abgebrochen.
3) Stattdessen gab man 1,0 ml einer 0,23 molaren TDI-Lösung in Toluol, sowie 3,5 ml PO und 0,28 ml der 1,0 molaren TIBA-Lösung hinzu, und polymerisierte 2 Stunden bei 0°C. Zu diesem Zeitpunkt hatte sich ein unlösliches Polymergel gebildet.

### Vergleichsbeispiele 5V bis 8V:

Beispiel 2 wurde wiederholt, allerdings verwendete man in Schritt 2) anstelle der TDI-Lösung die nicht erfindungsgemäßen Kopplungsmittel Y1 bis Y4. Die Tabelle fasst die Polymerisationsbedingungen und die Ergebnisse zusammen.

**Tabelle: Vergleichsbeispiele**

| Beispiel | Kopplungsmittel | Polymerisationsbedingungen in Schritt 2) | Ergebnis der GPC: Anteil gekoppelter Polymere [%] |
|---|---|---|---|
| 5V | Y1 | 15 h, 60°C | 0 |
| 6V | Y2 | 48 h, 60°C | <5 |
| 7V | Y3 | 15 h, 60°C | 0 |
| 8V | Y4 | 24 h, 0°C | etwa 10 |

Die Beispiele zeigen, dass sich mit dem erfindungsgemäßen Verfahren sowohl OxiranHomopolymere mit höherem Molekulargewicht, als auch Blockcopolymere, Pfropfpolymere und vernetzte Polymere herstellen ließen.

## Patentansprüche

1. Verfahren zur Herstellung von Polymeren P2 aus Oxiranen und optionalen Comonomeren, **dadurch gekennzeichnet, dass** man
1) in einem Schritt 1) aus den Oxiranen und ggf. den Comonomeren durch anionische Polymerisation in Gegenwart eines Aluminiumorganyls ein oder mehrere Oxiranpolymere P1 mit einem gewichtsmittleren Molekulargewicht M1 herstellt, und
2) in einem Schritt 2) diese Oxiranpolymere P1 mit einem Kopplungsmittel zu dem Polymer P2 mit einem gewichtsmittleren Molekulargewicht M2 umsetzt, wobei M2 größer ist als M1, und wobei das Kopplungsmittel ein aromatisches oder aliphatisches Isocyanat ist, das mindestens zwei Isocyanatgruppen pro Molekül aufweiset.

2. Verfahren nach Anspruch 1, **dadurch gekennzeichnet, dass** die Oxirane ausgewählt sind aus Propylenoxid, Ethylenoxid oder deren Mischungen.

3. Verfahren nach den Ansprüchen 1 bis 2, **dadurch gekennzeichnet, dass** die Comonomere ausgewählt sind aus Styrol, α-Methylstyrol, Butadien, Isopren oder deren Mischungen.

4. Verfahren nach Anspruch 3, **dadurch gekennzeichnet, dass** das Isocyanat ein Toluylendiisocyanat ist.

5. Verfahren nach den Ansprüchen 3 und 4, **dadurch gekennzeichnet, dass** man in Schritt 1) ein Oxiran-Homopolymer P1 herstellt und dieses in Schritt 2) mit dem Kopplungsmittel zu einem Polymer P2 mit zwei oder mehr Ästen aus Oxiran- ' Homopolymer umsetzt.

6. Verfahren nach den Ansprüchen 3 und 4, **dadurch gekennzeichnet, dass** man in Schritt 1) ein Oxiran-Blockcopolymer P1 herstellt und dieses in Schritt 2) mit dem Kopplungsmittel zu einem Blockcopolymer P2 umsetzt.

7. Verfahren nach den Ansprüchen 3, 4 und 6, **dadurch gekennzeichnet, dass** man in Schritt 1) ein Zweiblockcopolymer P1 Polypropylenoxid-Polystyrol (PPO-PS) herstellt und dieses in Schritt 2) zu einem Blockcopolymer P2 PS-PPO-PPÖ-PS umsetzt.

8. Verfahren nach den Ansprüchen 3 bis 7, **dadurch gekennzeichnet, dass** man nach Schritt 2)
3) in einem Schritt 3) das Polymer P2 mit weiterem Isocyanat zu einem Pfropfpolymer P3 umsetzt.

9. Verfahren nach Anspruch 8, **dadurch gekennzeichnet, dass** das Pfropfpolymer P3 eine Pfropfgrundlage aus Isocyanatresten und eine Pfropfauflage aus Oxiranpolymeren aufweist.

10. Verfahren nach den Ansprüchen 3 bis 7, **dadurch gekennzeichnet, dass** man nach Schritt 2)
3) in einem Schritt 3) das Polymer P2 mit weiterem Isocyanat und weiterem Oxiran zu einem vernetzten Polymer P3 umsetzt.

11. Verfahren nach Anspruch 10, **dadurch gekennzeichnet, dass** das vernetzte Polymer P3 Isocyanatreste aufweist, die über Oxiranpolymere dreidimensional verknüpft sind.

12. Polymere aus Oxiranen, erhältlich nach dem Verfahren gemäß den Ansprüchen 3 bis 11.

13. Verwendung der Polymere gemäß Anspruch 12 zur Herstellung von Formkörpern, Folien, Fasern und Schäumen.

14. Formkörper, Folien, Fasern und Schäume aus den Polymeren gemäß Anspruch 12.

## Claims

1. A process for the preparation of polymers P2 from oxiranes and from optional comonomers, which comprises
1) in a step 1), preparing one or more oxirane polymers P1. with a weight-average molar mass M1, from the oxiranes and, if appropriate, from the comonomers, via anionic polymerization in the presence of an organylaluminum compound, and
2) in a step 2), reacting these oxirane polymers P1 with a coupling agent to give the polymer P2 with a weight-average molar mass M2, where M2 is greater than M1, and where the coupling agent is an aromatic or aliphatic isocyanate which has at least two isocyanate groups per molecule.

2. The process according to claim 1, wherein the oxiranes have been selected from propylene oxide, ethylene oxide, or a mixture of these.

3. The process according to claims 1 to 2, wherein the comonomers have been selected from styrene, α-methylstyrene, butadiene, isoprene, or a mixture of these.

4. The process according to claim 3, wherein the isocyanate is a tolylene diisocyanate.

5. The process according to claims 3 and 4, wherein an oxirane homopolymer P1 is prepared in step 1) and, in step 2), is reacted with the coupling agent to give a polymer P2 having two or more branches composed of oxirane Homopolymer.

6. The process according to claims 3 and 4, wherein an oxirane block copolymer P1 is prepared in step 1) and, in step 2), is reacted with the coupling agent to give a block copolymer P2.

7. The process according to claims 3, 4 and 6, wherein a polypropylene oxide-polystyrene (PPO-PS) two-block copolymer P1 is prepared in step 1), and in step 2) is reacted to give a PS-PPO-PPO-PS block copolymer P2.

8. The process according to claims 3 to 7, wherein, after step 2),
3) in a step 3), the polymer P2 is reacted with further isocyanate to give a graft polymer P3.

9. The process according to claim 8, wherein the graft polymer P3 has a graft base composed of isocyanate residues and has a graft composed of Oxirane polymers.

10. The process according to claims 3 to 7, wherein, after step 2),
3) in a step 3), the polymer P2 is reacted wit further isocyanate and with further Oxirane two give a crosslinked polymer3.

11. The process according to claim 10, wherein the crosslinked polymer P3 has isocyanate residues which have been three-dimensionally crosslinked by way of Oxirane polymer.

12. A polymer composed of oxiranes, obtainable by the process according to claims 3 to 11.

13. The use of the polymers according to claim 12 for the production of moldings, of foils, of fibers, or of foams.

14. A molding, a foil, a fiber, or a foam composed of the polymers according to claim 12.

## Revendications

1. Procédé de fabrication de polymères P2 à partir d'oxiranes et éventuellement de comonomères,
**caractérisé en ce que**
1) dans une première étape 1), un ou plusieurs polymères d'oxiranes P1 d'un poids moléculaire moyen en poids M1 sont préparés à partir des oxiranes et éventuellement des comonomères par polymérisation anionique en présence d'un organyle d'aluminium, et
2) dans une seconde étape 2), ces polymères d'oxiranes P1 sont mis en réaction avec un agent de couplage pour former le polymère P2 d'un poids moléculaire moyen en poids M2, M2 étant supérieur à M1 et l'agent de couplage étant un isocyanate aromatique ou aliphatique qui comprend au moins deux groupements isocyanate par molécule.

2. Procédé selon la revendication 1, **caractérisé en ce que** les oxiranes sont choisis parmi l'oxyde de propylène, l'oxyde d'éthylène ou leurs mélanges.

3. Procédé selon les revendications 1 à 2,
**caractérisé en ce que** les comonomères sont choisis parmi le styrène, l'α-méthylstyrène, le butadiène, l'isoprène ou leurs mélanges.

4. Procédé selon la revendication 3, **caractérisé en ce que** l'isocyanate est un diisocyanate de toluylène.

5. Procédé selon les revendications 3 et 4,
**caractérisé en ce qu'**un homopolymère d'oxiranes P1 est préparé à l'étape 1) et transformé à l'étape 2) avec un agent de couplage en un polymère P2 qui comporte deux branches ou palus de l'homopolymère d'oxiranes.

6. Procédé selon les revendications 3 et 4,
**caractérise en ce qu'**un copolymère séquence d'oxiranes P1 est préparé à l'étape 1) et transforme à l'étape 2) avec un agent de couplage en un copolymère séquencé P2.

7. Procédé selon les revendications 3, 4 et 6,
**caractérisé en ce qu'**un copolymère P1 à deux séquence oxyde de polypropylène-polystyrène (PPO-PS) est préparé à l'étape 1) et transformé à l'étape 2) en un copolymère séquencé P2 PS-PPO-PPO-PS.

8. Procédé selon les revendications 3 à 7,
**caractérisé en ce qu'**après l'étape 2),
3) dans une étape 3), le polymère P2 est mis en réaction avec un isocyanate supplémentaire pour former un polymère greffé P3.

9. Procédé selon la revendication 8 , **caractérisé en ce que** le polymère greffé P3 présence une base de greffage constituée de radiaux isocyanate et un complément de greffe constitué de polymères d'oxiranes.

10. Procédé selon les revendications 3 à 7,
**caractérisé en ce qu'**après l'étape 2
3) dans une étape 3), le polymère P2 est mis en réaction avec un isocyanate supplémentaire et un oxirane supplémentaire pour former un polymère P3 réticulé.

11. Procédé selon la revendication 10, **caractérisé en ce que** le polymère P3 réticulé comprend des radiaux isocyanate qui sont reliées de manière tridimensionnelle sur des polymères d'oxiranes.

12. Polymères d'oxiranes qui peuvent être obtenus par le procédé selon les revendications 3 à 11.

13. Utilisation des polymères selon la revendication 12 pour la fabrication de corps moulés, de feuilles, de fibres et de mousses.

14. Corps moulés, feuilles, fibres et mousses fabriqués à partir des polymères selon la revendication 12.
